# EUROPÄISCHE PATENTANMELDUNG

(11) **EP 3 378 644 A1**
(43) Veröffentlichungstag der Anmeldung: **26.09.2018**
(21) Anmeldenummer: 18000293.3
(22) Anmeldetag: 23.03.2018
(51) Int. Cl.: B32B 37/15, B32B 37/00, B42D 25/45, B32B 37/14, B29C 47/56

(54) **VERBUNDFOLIE**

(30) Priorität: 24.03.2017 DE 102017002861
(71) Anmelder: Giesecke+Devrient Mobile Security GmbH, 81677 München (DE)
(72) Erfinder: Riedl, Josef, 85395 Attenkirchen (DE)

(57) **Zusammenfassung**

Ein Verfahren zur Herstellung einer Verbundfolie (1) für Sicherheits- und/oder Wertdokumente. Dabei wird mindestens ein schmelzflüssiger Kunststoff (3a, 3b) durch eine schlitzartige Öffnung (7) einer Düse (4) extrudiert. Ferner wird eine Materialbahn (5) mittels einer Zuführeinrichtung (6) der Düse (4) zugeführt. Diese wird innerhalb der Düse (4) mit dem mindestens einen schmelzflüssigen Kunststoff (3a, 3b) beaufschlagt, so dass aus der schlitzartigen Öffnung (7) der Düse (4) ein Verbund (11), bestehend aus innenliegender Materialbahn (5) und jeweils außenliegendem Kunststoff (3a, 3b), austritt. Anschließend wird der Verbund (11) mit Hilfe mindestens eines Kalanders (12) geglättet, so dass eine Verbundfolie (1) entsteht.

## Beschreibung

Die vorliegende Erfindung betrifft ein Herstellungsverfahren für eine Verbundfolie für Sicherheits- und/ oder Wertdokumente, sowie eine für das Herstellungsverfahren geeignete Vorrichtung.

Verbundfolien können beispielsweise bei der Herstellung von ID- und Payment-Karten sowie Datenseiten von buchartigen Sicherheitsdokumenten oder dergleichen Anwendung finden. Dazu werden Verbundfolien üblicherweise mit weiteren thermoplastischen Kunststoffschichten durch Laminieren verbunden, so dass eine Datenseite oder eine ID- oder Payment-Karte entsteht. Mitunter werden die Verbundfolien vorab zweckmäßigerweise beidseitig mit einer Haftvermittlungsschicht versehen.

Als Kunststoffmaterial kommen zur Herstellung der Folien für die Karten und Datenseiten vielfach PC (Polycarbonat) und PEC (Blend aus PC und PETG) zum Einsatz. PEC findet Anwendung in der PECSEC® Datenseite, Datenseiten aus PECSEC® messen im Querschnitt 760 µm und sind daher im Gegensatz zu Datenseiten aus einfachem Polycarbonat, deren Querschnitt üblicherweise Werte zwischen 800µm bis 860µm besitzt, vergleichsweise dünn, daher sehr flexibel und weisen dementsprechend einen für den Nutzer höheren Tragekomfort auf. Trotz ihrer geringen Materialstärke sind in PECSEC®-Datenseiten üblicherweise elektronische Bauelemente, beispielsweise eine Antenne und/ oder ein RFID-Chip, integriert. Diese bilden dabei eine Schnittstelle zur Kommunikation mit einem Lesegerät, welches beispielsweise Nutzerdaten auslesen kann.

Zur Herstellung einer derartigen Verbundfolie für Sicherheits- und/ oder Wertdokumente wird beispielsweise einem extrudierten schmelzflüssigen Kunststoff nach dem Austritt aus einer Düse, beidseitig, jeweils eine Materialbahn zugeführt, so dass sich ein entsprechender Verbund, bestehend aus zwei außenliegenden Materialbahnen und einer innenliegenden Kunststoffschmelze, bildet. Dieser Verbund wird anschließend mittels eines Kalanders geglättet und gekühlt.

Aus der Druckschrift DE 10 2012 019 308 A1 ist ein gewebeverstärktes Inlay für Sicherheitsdokumente bekannt, das mit Hilfe des beschriebenen Verfahrens hergestellt werden kann.

Prinzipiell entsteht eine dauerhaft feste Verbindung zwischen den außenliegenden Materialbahnen und dem innenliegenden Kunststoff der Verbundfolie dadurch, dass sich der Kunststoff mit den zum Kunststoff gewandten Oberflächen der Materialbahnen verbindet und anschließend wieder erkaltet. Je höher dabei die Temperatur des schmelzflüssigen Kunststoffs, desto fester ist im Normalfall die Verbindung. Da der Verbund üblicherweise unterhalb der Temperatur des schmelzflüssigen Kunststoffs erst zwischen den Walzen des Kalanders erfolgt, ist die Verbindung zwischen Materialbahn und Kunststoff vergleichsweise schwach. Da ferner geeignete Materialkombinationen hinsichtlich Kunststoff und Materialbahn unter anderem von der Schmelztemperatur des Materials der Materialbahn abhängig sind, ergibt sich eine entsprechend begrenzte Anzahl von Kombinationsmöglichkeiten. In der Regel sind nur reine Kunststoffkombinationen möglich. Vielfach finden sogar nur Kombinationen thermoplastischer Kunststoffe Anwendung.

Um eine Rollneigung der Verbundfolie, bestehend aus den beiden außenliegenden Materialbahnen und dem innenliegenden Kunststoff, zu verhindern, müssen die beiden Materialbahnen beispielsweise hinsichtlich ihrer Abmessungen und Temperaturausdehnungskoeffizienten nahezu identisch sein und ferner eine möglichst identische, homogene Massenverteilung aufweisen. Ansonsten wird ein Aufbringen von Andrucken auf die Verbundfolie aufgrund der unebenen Oberflächen der Verbundfolie erschwert.

Aufgabe der vorliegenden Erfindung ist es, ein Herstellungsverfahren für eine Verbundfolie für Sicherheits- und/ oder Wertdokumente anzugeben, so dass die Verbundfolie gute Verbindungseigenschaften zwischen Materialbahn und Kunststoff besitzt.

Die Aufgabe wird durch ein Herstellungsverfahren mit den Merkmalen des unabhängigen Anspruchs 1 gelöst. Weiterbildungen und vorteilhafte Ausgestaltungen sind in den abhängigen Ansprüchen angegeben.

Gemäß einem Aspekt der Erfindung wird zur Herstellung einer Verbundfolie für Sicherheits- und/ oder Wertdokumente mindestens ein schmelzflüssiger Kunststoff durch eine schlitzartige Öffnung einer Düse extrudiert. Der Kunststoff wird dazu beispielsweise mittels mindestens eines Kanals in die Düse geleitet. In dieser weist der schmelzflüssige Kunststoff eine Temperatur auf, welche vorzugsweise weit über seiner Glasübergangstemperatur liegt. Darüber hinaus wird der Düse in geeigneter Weise eine Materialbahn zugeführt. Diese Materialbahn wird innerhalb der Düse mit dem Kunststoff beidseitig beaufschlagt, so dass ein Verbund, bestehend aus der innenliegenden Materialbahn und dem jeweils außenliegenden Kunststoff, aus der schlitzartigen Öffnung der Düse austritt. Anschließend wird dieser Verbund mittels mindestens eines Kalanders geglättet und gekühlt, so dass eine Verbundfolie mit einer dauerhaft festen Verbindung zwischen der innenliegenden Materialbahn und dem jeweils außenliegenden Kunststoff entsteht.

Dadurch dass die Beaufschlagung der Materialbahn bereits in der Düse und nicht wie gemäß dem Stand der Technik erst außerhalb der Düse stattfindet, wird die Materialbahn mit einer vergleichsweise hoch temperierten Kunststoffschmelze beaufschlagt. Dies führt zu einer innigeren Verbindung von Materialbahn und Kunststoff, so dass sich nach dem Glätten und Kühlen des Verbundes eine stabilere Verbindung zwischen der Materialbahn und dem Kunststoff einstellt. Besteht die Materialbahn beispielsweise aus einem thermoplastischen Kunststoffmaterial, so können, in Abhängigkeit von der Temperatur des schmelzflüssigen Kunststoffs und der Schmelztemperatur des verwendeten Materials der Materialbahn, die der Kunststoffschmelze zugewandten Oberflächen der Materialbahn durch die Beaufschlagung mit dem schmelzflüssigen Kunststoff aufschmelzen und sich dadurch entsprechend gut mit dem Kunststoff verbinden.

Gemäß einem bevorzugten Aspekt der Erfindung umfasst eine Vorrichtung zur Herstellung der Verbundfolie für Sicherheits- und/ oder Wertdokumente zwei zur Düse führende Kanäle. Mit Hilfe der genannten Kanäle können insbesondere zwei unterschiedliche Kunststoffe in die Düse eingeleitet werden. Beispielsweise unterscheiden sich die ausgewählten Kunststoffe hinsichtlich ihrer Materialzusammensetzung oder ihrer optischen Eigenschaften, wobei ein Kunststoff z.B. transparent und der andere Kunststoff z.B. opak ist. Vorzugsweise wird für die genannten Kunststoffe ein Material oder eine Mischung von Materialien aus der Gruppe Thermoplast und thermoplastisches Elastomer ausgewählt.

Bevorzugt weisen die genannten schmelzflüssigen Kunststoffe innerhalb der Düse eine Temperatur auf, welche weit über der Glasübergangstemperatur des jeweiligen Kunststoffs liegt, so dass eine gute Verbindung zu den Oberflächen der Materialbahn entstehen kann. Besonders bevorzugt weisen Kunststoffe aus PC in der Düse eine Temperatur von ca. 290°C, PET von ca. 260°C, PLA von ca. 200°C und Polyolefin von ca. 170°C auf.

Die Materialbahn ist vorzugsweise eine Kunststofffolie. Es kann sich alternativ z.B. um ein textiles Flächengebilde, vorzugsweise ein Vlies oder ein Gewebe, insbesondere aus Natur- oder Kunststofffasern, handeln. Die Materialbahn kann aber auch aus einem anorganischen Stoff, vorzugsweise Metall, besonders bevorzugt einem Metallgewebe, einer Metallfolie, insbesondere aus Aluminium, oder einem metallbedampften Material bestehen. Es ist allerdings bevorzugt, dass die Materialbahn aus einem Material oder einer Mischung von Materialien aus der Gruppe der Kunststoffe, Thermoplast, Duroplast, Elastomer und thermoplastisches Elastomer besteht. Dabei kann eine derartige Materialbahn sowohl als Folie, als auch als Gewebe oder Vlies ausgestaltet sein. Die Materialbahn kann beispielsweise aus einem transparenten Kunststoff bestehen, wobei bevorzugt eine Oberfläche der Materialbahn als Sicherheitsfeature eine Linsenstruktur, beispielsweise eine Linsenstruktur zu Erzeugung und/ oder Betrachtung eines MLI-Bildes (Multiple Laser Image) oder dergleichen, aufweist. Bei einem MLI werden durch eine Linsenstruktur z.B. auf einem Polycarbonat-Dokument zwei oder mehr unterschiedliche Informationen unter einem Kippwinkel eingebrannt. Aus einer Verbundfolie mit einer derartigen Materialbahn lassen sich Karten mit innenliegendem MLI herstellen. Beim Kippen einer solchen Karte in horizontaler Richtung werden die unterschiedlichen Informationen sichtbar. Zur Erhöhung der Fälschungssicherheit von entsprechenden Sicherheitsdokumenten, beispielsweise ID-Karten, für welche die mit diesem Verfahren hergestellten Verbundfolien eingesetzt werden können, kann die Materialbahn darüber hinaus selbst oder in Verbindung mit dem Kunststoff weitere Sicherheitselemente oder ein oder mehrere elektrische Bauelemente, beispielsweise Spulen, Antennen, Chips, aber auch Sensoren oder dergleichen, aufweisen.

Die Materialbahn muss für den Zeitraum der Beaufschlagung mit der Kunststoffschmelze, vorzugsweise 3 bis 15 Sekunden, der Temperatur der Kunststoffschmelze standhalten. Diese Voraussetzung wird dann erfüllt, wenn eine Materialbahn mit einer Temperaturstabilität eingesetzt wird, die höher ist als die Temperatur des schmelzflüssigen "Kunststoffs. Darüber hinaus kann diese Voraussetzung auch dann erfüllt sein, wenn die Materialbahn eine Temperaturbeständigkeit aufweist, die geringer ist als die Temperatur der Kunststoffschmelze, wobei jedoch infolge des kurzzeitigen Kontakts mit dem Kunststoff nur die entsprechenden Oberflächen kurzzeitig aufschmelzen.

Im Anschluss an die beidseitige Beaufschlagung der Materialbahn mit dem Kunststoff tritt der Verbund, bestehend aus innenliegender Materialbahn und außenliegendem Kunststoff, aus der schlitzartigen Öffnung der Düse aus. Anschließend wird der Verbund an einem Kalander geglättet und gekühlt, so dass der Verbund erstarrt und eine Verbundfolie mit einer Dicke von 50µm bis 600µm, vorzugsweise von 100µm bis 550µm, besonders bevorzugt von 150µm bis 500µm, entsteht. Diese Verbundfolie kann gegebenenfalls mit einer oder mehreren weiteren Folien zu einer mehrschichtigen Folie laminiert werden

Bevorzugte Ausführungsformen der Erfindung sowie weitere vorteilhafte Ausgestaltungen werden anhand der begleitenden Zeichnungen näher erläutert. Es zeigen:
- Fig. 1: eine schematische Darstellung einer Vorrichtung für ein Verfahren zur Herstellung einer Verbundfolie, und
- Fig. 2: eine schematische Darstellung eines Querschnitts einer Verbundfolie.

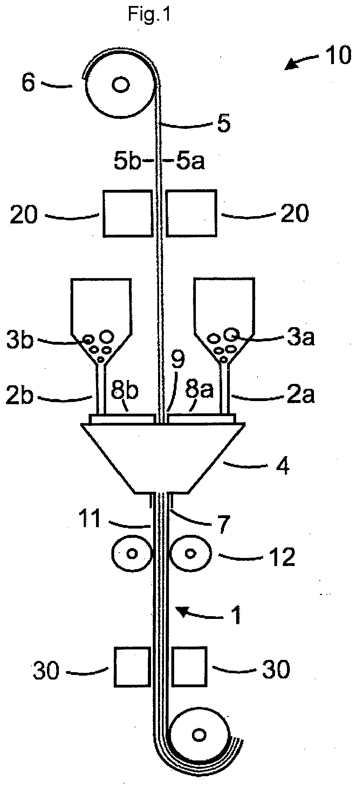

Die in Fig. 1 dargestellte Vorrichtung 10 für ein Verfahren zur Herstellung einer Verbundfolie 1 für Sicherheits- und/ oder Wertdokumente umfasst einen ersten Kanal 2a und einen zweiten Kanal 2b, wobei die genannten Kanäle 2a, 2b zu einer Düse 4 mit einer schlitzartigen Öffnung 7 führen. Diese Düse 4 umfasst einen Block 8 mit einer ebenfalls schlitzartigen Öffnung 9, wobei der Block 8 aus wartungstechnischen Gründen in eine erste Baugruppe 8a und eine zweite Baugruppe 8b teilbar ist. In diesem Block 8 können sich Vorrichtungen für die anschließende Beaufschlagung der Materialbahn 5 mit den Kunststoffen 3a, 3b, beispielsweise Kanalabzweigungen und dergleichen, befinden. Zudem umfasst die Vorrichtung 10 eine Zuführeinrichtung 6 und mindestens einen Kalander 12. Darüber hinaus kann die Vorrichtung 10 zusätzlich eine oder mehrere erste Bearbeitungseinrichtungen 20 zur Bearbeitung der Materialbahn 5 und eine oder eine zweite Bearbeitungseinrichtungen 30 zur Bearbeitung der Verbundfolie 1 umfassen.

Zur Herstellung der Verbundfolie 1, die beispielsweise zur Herstellung einer Datenseite aus PECSEC® oder PC für ein buchartiges Sicherheitsdokument Anwendung finden kann, kann mittels des ersten Kanals 2a ein erster schmelzflüssiger Kunststoff 3a in die erste Baugruppe 8a des Blocks 8 und mittels des zweiten Kanals 2b ein vom ersten schmelzflüssigen Kunststoff 3a verschiedener zweiter schmelzflüssiger Kunststoff 3b in die zweite Baugruppe 8b des Blocks 8 geleitet werden. Von den genannten Baugruppen 8a, 8b des Blocks 8 wird der zugehörige schmelzflüssige Kunststoff 3a, 3b in die Düse 4 geleitet. Mittels der Zuführeinrichtung 6 wird der Düse 4 eine Materialbahn 5 mit einer ersten Seite 5a und einer der ersten Seite 5a gegenüberliegenden zweiten Seite 5b zugeführt. Das Zuführen der Materialbahn 5 erfolgt dabei ausgehend von der Zuführeinrichtung 6 über die schlitzartige Öffnung 9 des Blocks 8 in die Düse 4. Innerhalb der Düse 4 werden die erste Seite 5a der Materialbahn 5 kontinuierlich und über die gesamte Breite mit dem ersten schmelzflüssigen Kunststoff 3a und die zweite Seite 5b der Materialbahn 5 mit dem zweiten schmelzflüssigen Kunststoff 3b beaufschlagt. Dabei weisen die schmelzflüssigen Kunststoffe 3a, 3b eine Temperatur auf, welche weit über der Glasübergangstemperatur der verwendeten Kunststoffe 3a, 3b liegt, so dass sich auch weniger affine Materialien mit dem schmelzflüssigen Kunststoff 3a, 3b verbinden. Die Kunststoffe 3a, 3b können frei z.B. aus einem Material oder einer Mischung von Materialien aus der Gruppe Thermoplast und thermoplastisches Elastomer ausgewählt werden. Bevorzugt kommen dafür die Kunststoffe PC und PEC zum Einsatz. Die der Düse 4 zugeführte Materialbahn 5 muss jedoch im Wesentlichen aus einem Material bestehen, das kurzfristig, etwa 3 bis 15 Sekunden, der Temperatur des schmelzflüssigen Kunststoffs 3a, 3b standhält. Dabei kann die Materialbahn 5 entweder aus einem Material bestehen das eine Temperaturstabilität aufweist, die höher ist als die Temperatur der schmelzflüssigen Kunststoffe 3a, 3b, d.h. die erste Seite 5a und die zweite Seite 5b der Materialbahn 5 schmelzen nicht auf, oder die Materialbahn 5 besteht aus einem Material, das eine Temperaturstabilität aufweist, die geringer ist als die Temperatur der schmelzflüssigen Kunststoffe 3a, 3b, d.h. lediglich die Oberfläche der ersten Seite 5a und der zweiten Seite 5b der Materialbahn 5 schmelzen auf. In Abhängigkeit von der Temperatur des schmelzflüssigen Kunststoffs 3a, 3b eignet sich als Material für die Materialbahn 5 ein Material oder eine Mischung von Materialien aus der Gruppe der Kunststoffe, Thermoplast, Duroplast, Elastomer und/oder thermoplastisches Elastomer. Ferner kann die Materialbahn 5 auch aus anorganischen Stoffen, z.B. Metall, bestehen. Allgemein kann die Materialbahn 5 sowohl als Folie als auch als textiles Flächengebilde, z.B. als Gewebe oder Vlies, ausgeführt sein.

In der Materialbahn 5 können Druckmerkmale und Sicherheitsfeatures, beispielsweise Hologramme für die Herstellung einer Hologrammfolie, und/ oder elektronische Bauteile, wie Spulen oder Antennen, aber auch optische Linsen oder Oberflächenstrukturen, beispielsweise MLI oder dergleichen, von vornherein integriert sein oder sie können darin integriert werden. Dazu ist der Zuführeinrichtung 6 eine erste Bearbeitungseinrichtung 20 nachgeschaltet, mittels welcher die genannten Elemente und Merkmale auf die Materialbahn 5 aufgebracht oder in die Materialbahn 5 integriert werden können. Verbundfolien mit Materialbahnen 5 mit derart integrierten Elementen und Merkmalen sind vorzugsweise für die Herstellung von Inlays, z.B. für DI-Karten (Dual-Interface), geeignet.

Nach der Beaufschlagung der ersten Seite 5a und der zweiten Seite 5b der Materialbahn 5 mit dem zugehörigen schmelzflüssigen Kunststoff 3a, 3b, treten die Materialbahn 5 und der Kunststoff 3a, 3b aus der schlitzartigen Öffnung 7 der Düse 4 gemeinsam aus, so dass ein Verbund 11 entsteht. Dieser Verbund 11, bestehend aus innenliegender Materialbahn 5 und jeweils außenliegendem schmelzflüssigen Kunststoff 3a, 3b, wird anschließend mittels zwei der Düse 4 nachgeordneten Walzen eines Kalanders 12 geglättet und gekühlt, so dass eine feste Verbindung zwischen dem Kunststoff 3a, 3b und der Materialbahn 5 gebildet wird und dadurch die dreilagige Verbundfolie 1 entsteht.

Abschließend kann die Verbundfolie 1 mit Hilfe einer dem Kalander 12 nachgeordneten zweiten Bearbeitungseinrichtung 30 für eine Weiterverarbeitung, beispielsweise zu einer Datenseite für buchartige Sicherheitsdokumente, aufbereitet werden. Dazu können mittels der zweiten Bearbeitungseinrichtung 30 z.B. beidseitig Haftvermittlungsschichten auf die Verbundfolie 1 aufgebracht werden, so dass sich die Verbundfolie 1 anschließend mit anderen Folien zu einem stabilen Datenträger laminieren lässt. Die Verbundfolie 1 kann in der Bearbeitungseinrichtung 30 auch unmittelbar mit ein oder mehreren weiteren Folien laminiert werden. Vorzugsweise wird mit der Bearbeitungseinrichtung 30 die Verbundfolie 1 mit einem oder mehreren weiteren Druckmerkmalen vorab bedruckt.

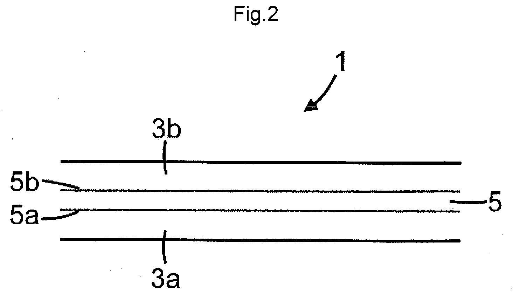

Fig. 2 zeigt eine schematische Darstellung eines Querschnittes der Verbundfolie 1. Die Verbundfolie 1 weist die innenliegende Materialbahn 5 mit der ersten Seite 5a und der zweiten Seite 5b auf. Zudem umfasst die Verbundfolie 1 den mit der ersten Seite 5a der Materialbahn 5 verbundenen ersten Kunststoff 3a sowie den mit der zweiten Seite 5b der Materialbahn 5 verbundenen zweiten Kunststoff 3b, wobei diese Kunststoffe 3a, 3b auch identisch sein können.

## Patentansprüche

1. Verfahren zur Herstellung einer Verbundfolie (1) für Sicherheits- und/ oder Wertdokumente, umfassend die folgenden Schritte:
- Extrudieren von mindestens einem schmelzflüssigen Kunststoff (3a, 3b) durch eine schlitzartige Öffnung (7) einer Düse (4),
- Führen einer Materialbahn (5) mit einer ersten Seite (5a) und einer der ersten Seite (5a) gegenüberliegenden zweiten Seite (5b) durch die schlitzartige Öffnung (7) der Düse (4) hindurch, wobei die Materialbahn (5) innerhalb der Düse (4) beidseitig mit dem mindestens einen schmelzflüssigen Kunststoff (3a, 3b) beaufschlagt wird, so dass nach dem Austritt der Materialbahn (5) aus der schlitzartigen Öffnung (7) der Düse (4) ein Verbund (11) bestehend aus der innenliegenden Materialbahn (5) und dem jeweils außenliegenden Kunststoff (3a, 3b) entsteht, und
- Glätten des Verbundes (11) mittels mindestens eines Kalanders (12), so dass eine Verbundfolie (1) entsteht.

2. Verfahren nach Anspruch 1, wobei die erste Seite (5a) der Materialbahn mit einem ersten Kunststoff (3a) und die zweite Seite (5b) der Materialbahn (5) mit einem zum ersten Kunststoff (3a) verschiedenen Kunststoff (3b) beaufschlagt wird.

3. Verfahren nach einem der Ansprüche 1 oder 2, wobei für den Kunststoff (3a, 3b) ein Material oder eine Mischung von Materialien aus der Gruppe Thermoplast oder thermoplastisches Elastomer ausgewählt wird.

4. Verfahren nach einem der Ansprüche 1 bis 3, wobei die Materialbahn (5) ein textiles Flächengebilde, vorzugsweise Vlies oder Gewebe, umfasst.

5. Verfahren nach einem der Ansprüche 1 bis 4, wobei für die Materialbahn (5) ein Material oder eine Mischung von Materialien aus der Gruppe der Kunststoffe, vorzugsweise Thermoplast, Duroplast, Elastomer und/ oder thermoplastisches Elastomer, ausgewählt wird.

6. Verfahren nach einem der Ansprüche 1 bis 5, wobei die Materialbahn (5) mindestens einen anorganischen Stoff, vorzugsweise Metall, besonders bevorzugt ein Metallgewebe oder eine Metallfolie, insbesondere aus Aluminium, umfasst.

7. Verfahren nach einem der Ansprüche 1 bis 6, wobei die Materialbahn (5) transparent ist und mindestens eine Oberfläche der Materialbahn (5) eine Linsenstruktur aufweist.

8. Verfahren nach einem der Ansprüche 1 bis 7, wobei die Materialbahn (5) selbst oder in Verbindung mit dem mindestens einem Kunststoff (3a, 3b) ein oder mehrere Sicherheitselemente, Sicherheitsmerkmale und/ oder elektrische Bauelemente aufweist.

9. Verfahren nach einem der Ansprüche 1 bis 8, wobei die Materialbahn (5) eine Temperaturbeständigkeit aufweist, die höher ist als die Temperatur des schmelzflüssigen Kunststoffs (3a, 3b).

10. Verfahren nach einem der Ansprüche 1 bis 8, wobei die Materialbahn (5) eine Temperaturbeständigkeit aufweist, die geringer ist als die Temperatur des schmelzflüssigen Kunststoffs (3a, 3b), infolge des Kontaktes mit dem schmelzflüssigen Kunststoff (3a, 3b) zumindest an der Oberfläche aufschmilzt und spätestens am Kalander (12) wieder erstarrt.

11. Verfahren nach einem der Ansprüche 1 bis 10, wobei die Verbundfolie (1) eine Dicke von 50µm bis 600µm, vorzugsweise von 100µm bis 550µm, besonders bevorzugt von 150µm bis 500µm, aufweist.

12. Verfahren nach einem der Ansprüche 1 bis 11, wobei die Verbundfolie (1) mit mindestens einer weiteren Folie zu einem Datenträger, vorzugsweise einem elektronischen Datenträger, insbesondere von ID- und Payment-Karten, verbunden wird.

13. Vorrichtung (10) zur Durchführung eines Verfahrens nach einem der Ansprüche 1 bis 11, umfassend
- mindestens einen Kanal (2a, 2b), der zu einer Düse (4) mit einer schlitzartigen Öffnung (7) führt, um in die Düse (4) mindestens einen schmelzflüssigen Kunststoff (3a, 3b) einzuleiten;
- eine der Düse (4) vorgeordnete Zuführeinrichtung (6), von der aus eine Materialbahn (5) mit einer ersten Seite (5a) und einer der ersten Seite (5a) gegenüberliegenden zweiten Seite (5b) der Düse (7) zugeführt wird, wobei die Materialbahn (5) innerhalb der Düse (4) beidseitig mit mindestens einem schmelzflüssigen Kunststoff (3a, 3b) beaufschlagt wird, so dass aus der schlitzartigen Öffnung (7) der Düse (4) ein Verbund (11), bestehend aus der innenliegenden Materialbahn (5) und dem jeweils außenliegenden Kunststoff (3), austritt, sowie
- ein der Düse (4) nachgeordneter Kalander (12) zum Kalandrieren des Verbundes (11) zur Herstellung einer Verbundfolie (1).
